(19) Europäisches Patentamt
European Patent Office
Office européen des brevets

(11) Veröffentlichungsnummer : **0 057 382**
**B1**

(12) # EUROPÄISCHE PATENTSCHRIFT

(45) Veröffentlichungstag der Patentschrift : **28.12.83**

(51) Int. Cl.³ : **C 09 B 1/36**, C 09 B 1/467, C 09 B 5/36

(21) Anmeldenummer : **82100402.5**

(22) Anmeldetag : **21.01.82**

(54) **Verfahren zur Herstellung von Küpenfarbstoffen aus Abfallprodukten der Nitroanthrachinon- und Anthrachinonsulfonsäuresynthesen.**

(30) Priorität : **31.01.81 DE 3103350**

(43) Veröffentlichungstag der Anmeldung : **11.08.82 Patentblatt 82/32**

(45) Bekanntmachung des Hinweises auf die Patenterteilung : **28.12.83 Patentblatt 83/52**

(84) Benannte Vertragsstaaten : **CH DE FR LI**

(56) Entgegenhaltungen :
**DE-A- 2 522 612**
**DE-A- 2 530 067**
**FR-A- 2 415 127**
**GB-A- 2 060 670**

(73) Patentinhaber : **BAYER AG**
**Zentralbereich Patente, Marken und Lizenzen**
**D-5090 Leverkusen 1, Bayerwerk (DE)**

(72) Erfinder : **Hohmann, Walter, Dr.**
**Fontanestrasse 17**
**D-5090 Leverkusen (DE)**
Erfinder : **Wunderlich, Klaus, Dr.**
**Carl-Rumpff-Strasse 21**
**D-5090 Leverkusen (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 057 382 B1

Jouve, 18, rue St-Denis, 75001 Paris, France

Verfahren zur Herstellung von Küpenfarbstoffen aus Abfallprodukten der Nitroanthrachinon- und Antrachinonsulfonsäuresynthesen

Anthrachinon-1-sulfonsäure ist bekanntlich ein bedeutendes Schlüsselprodukt der Anthrachinonfarbstoffchemie.

Diese Verbindung wird technisch in der Regel durch Quecksilber-katalysierte Sulfierung von Anthrachinon in $SO_3$-haltiger Schwefelsäure hergestellt.

Bedingt durch die hohe Löslichkeit dieser Sulfonsäure in wäßrigen Medien können aus dem Reaktionsgemisch jedoch nur 65-70 % an technisch reinem Produkt isoliert werden. Der Rest befindet sich im Abwasser, dessen Reinigung erhebliche Schwierigkeiten bereitet.

Es ist bereits vorgeschlagen worden, die Sulfonsäure in diesen Abwässern durch « Fischerung » in das wasserunlösliche Chloranthrachinon überzuführen und dieses durch Filtration abzutrennen (vgl. DE-A-24 37 527).

Weiterhin ist bereits bekannt, die aus Anthrachinonsulfierungsmutterlaugen — ganz allgemein — durch « Fischerung » isolierten Halogenanthrachinone in Dispersionsfarbstoffe umzuwandeln (vgl. DE-A-24 37 523 und DE-A-24 50 287).

Dieses Verfahren eignet sich aber vor allem nur zur Aufarbeitung von Abwässern der Anthrachinon-α-disulfierung.

Außerdem übersteigt der Anfall der aus Abwässern abgeschiedenen Chloranthrachinone bei weitem den Bedarf für die Weiterverarbeitung in Richtung Textilfarbstoffe.

Aus diesem Grund fallen riesige Menge an derartigen Abfallprodukten an, für die es keine vernünftigen Verwendungsmöglichkeiten gibt.

In jüngster Zeit ist man nun dazu übergegangen, anstelle der Anthrachinon-1-sulfonsäure das 1-Nitroanthrachinon als Ausgangsbasis für zahlreiche Zweige der Anthrachinonchemie zu verwenden, da dieser Stoff nach umweltfreundlicheren Methoden zugänglich ist.

Allerdings fallen auch bei der Mononitrierung des Antrachinons größere Mengen von Abfallprodukten an, für die ebenfalls bislang keine Einsatzmöglichkeiten zur Herstellung von Farbstoffen bekannt sind.

Lediglich von den bei der Dinitrierung des Anthrachinons entstehenden Reaktionsgemischen war bisher bekannt, daß diese in spezielle Küpenfarbstoffe übergeführt werden können (vgl. DE-A-29 01 499, Seite 12).

Es wurde nun gefunden, daß man sowohl die aus den Monosulfierungsabwässern isolierten Halogenanthrachinone als auch aus den Abfallprodukten der Mononitrierung wertvolle Küpenfarbstoffe herstellen kann, wenn man diese Produkte in an sich bekannter Weise in Aminoanthrachinone umwandelt und diese gegebenenfalls in Mischung mit anderen Aminoanthrachinonen — in ebenfalls an sich bekannter Weise mit polyfunktionellen Säurehalogeniden zu entsprechenden Anthrachinonamiden umsetzt.

Der Ausdruck « polyfunktionelle Säurehalogenide » soll dabei im weitesten Sinne verstanden werden und außer aliphatische, cycloaliphatische und (pseudo)-aromatische Dicarbonsäurehalogenide, vorzugsweise -chloride, auch heterocyclische Verbindungen mit mindestens 2 beweglichen Halogen-, vorzugsweise Chloratomen umfassen.

Geeignete Säurehalogenide sind die Di- und Trichloride folgender Säuren :

Oxalsäure, Malonsäure, Terephthalsäure, Isophthalsäure, Diphenyldicarbonsäure-4,4', Naphthalindicarbonsäuren, Benzanthrondicarbonsäuren, Diphenylenoxid-(sulfid)-dicarbonsäure, Benzoltricarbonsäure-1,3,5 u. a. m.

Ferner sind beispielsweise geeignet : Fluor- und insbesondere Chlorverbindungen des Pyrimidins, Chinoxalins und vor allem des 1,3,5-Triazins, wie Cyanurchlorid und 2-Alkyl-(Alkoxy-, Alkylthio-, Phenoxy-, Phenylthio-, Amino-, Alkylamino-, Dialkylamino-, Phenylamino oder Phenyl-)-4,6-dichlortriazin-1,3,5, wobei « Alkyl » und « Alkoxy » derartige Reste mit 1-4 C-Atomen bedeuten.

Die Umwandlung der aus Abwässern isolierten Chloranthrachinone in Aminoanthrachinone erfolgt in üblicher Weise durch Umsetzung mit Ammoniak unter Druck.

Die Nitrierungsabfallprodukte werden durch Reduktion oder $NH_2$-Austausch der Nitrogruppe mittels $NH_3$, vorzugsweise unter Druck, in entsprechende Amine übergeführt.

Die so erhaltenen Aminoanthrachinone stellen Gemische unterschiedlicher Zusammensetzung dar, die ihrerseits von dem jeweiligen Nitrierungs- bzw. Sulfierungsverfahren sowie den Aufarbeitungsmethoden abhängig sind.

Grundsätzlich eignen sich für das neue Verfahren die Abfallprodukte aller gängigen Mononitrierungs- bzw. Monosulfierungsverfahren.

Bevorzugt ist jedoch der Einsatz solcher Abfallstoffe, die bei der Mononitrierung von Anthrachinon, insbesondere bei der Reinigung des rohen Mononitroanthrachinons anfallen. Bei diesen Reinigungsverfahren handelt es sich vor allem um eine Umkristallisation aus geeigneten Lösungsmitteln, wie sie beispielsweise in der DE-A-26 54 649 beschrieben sind, sowie um eine Abscheidung aus Mutterlaugen, wie sie etwa bei der Nitroanthrachinonherstellung gemäß DE-A-23 43 978 anfallen.

Die nach der Reduktion bzw. der Ammoniakumsetzung oder die aus den Mutterlaugen der 1-Aminoanthrachinon-Herstellung gemäß DE-A-23 43 977 erhaltenen Amingemische weisen folgende

Zusammensetzung auf :

a) maximal 60 %, vorzugsweise maximal 45 % 1-Aminoanthrachinon
b) maximal 40 %, vorzugsweise maximal 25 % 2-Aminoanthrachinon
c) mindestens 30 % 1,5-, 1,6-, 1,7- und 1,8-Diaminoanthrachinon und sonstige Verunreinigungen, wobei die Summe a) + b) maximal 70 % beträgt. (% = Gewichtsprozent)

Die Umsetzung dieser Amingemische, denen gewünschtenfalls andere Aminoanthrachinone zugesetzt werden können, mit den polyfunktionellen Säurehalogeniden erfolgt nach an sich bekannten Methoden (vgl. z. B. DE-C-390 201, 590 163, 824 816 und 1 073 130 sowie DE-A-16 44 532, 24 39 950).

Vorteilhafter als die in dieser Patentliteratur überwiegend beschriebenen zweistufigen Arbeitsweisen ist die « Eintopf-Kondensation » der vorzugsweise zu verwendenden Chlortriazinderivate mit den Aminoanthrachinongemischen in Gegenwart von aromatischen Oxiverbindungen (insbesondere Phenol) bei Temperaturen unterhalb 150 °C wobei auf 1 bewegliches Halogenatom etwa 1 Äquivalent Aminoanthrachinon eingesetzt wird und die Phenolmenge das 10- bis 40-fache der Säurehalogenidmenge beträgt.

Dabei geht man zweckmäßigerweise so vor, daß man das Gemisch der Reaktionspartner in der Phenolschmelze zunächst auf 70-110 °C bis zum erfolgten Mono- bzw. Dichloraustausch und danach auf 130-150 °C erhitzt, bis praktisch ein vollständiger Halogenaustausch stattgefunden hat.

Küpenfarbstoffe besonderer Qualität erhält man, wenn man einen Teil des erfindungsgemäß zu verwendenden « Abfallamingemisches » durch andere in der Chemie der Acylamino-Küpenfarbstoffe übliche Aminoanthrachinone ersetzt, wie z. B. 2-Amino-3,4-phthaloyl-7-brom-acridon, 1-Amino-4 (oder 5) -benzoylaminoanthrachinon, das im Benzoylrest durch $C_1$-$C_4$-Alkyl, Cl oder Nitro substituiert sein kann, 1-Amino-4-naphthoylaminoanthrachinon oder 1-Amino-4-acetyl-aminoanthrachinon.

Auch hierbei kann die Umsetzung mit den polyfunktionellen Säurechloriden im 2-Stufen- oder Eintopfverfahren oder als echte Mischkondensation durchgeführt werden. Technisch besonders vorteilhaft ist ein Eintopfverfahren mit gestaffelter Temperaturführung, wobei das Säurehalogenid in Gegenwart von Phenol zunächst vorzugsweise mit dem niedriger molekularen Amin bei 70-110 °C wie oben beschrieben umgesetzt wird und anschließend bei erhöhter Temperatur der vollständige Aminaustausch mit einem anderen der vorstehend erwähnten « Amine » herbeigeführt wird.

Man braucht dann nur noch das Phenol mit Wasserdampf oder im Vakuum abzutreiben, um den fertigen Küpenfarbstoff zu gewinnen.

Es empfiehlt sich jedoch in vielen Fällen, den rohen Küpenfarbstoff einer üblichen oxidativen Nachbehandlung mit Bichromat/Schwefelsäure, Persulfat/Schwefelsäure oder Hypochlorit zu unterwerfen.

Man erhält auf diese Weise bei nur verhältnismäßig geringen Substanzverlusten (< 10 %) Küpenfarbstoffe, die hinsichtlich ihrer coloristischen Eigenschaften entsprechenden Farbstoffen auf der Basis reiner Ausgangsmaterialien nahekommen, ja bisweilen diesen sogar überlegen sind.

Es ist zwar bereits bekannt geworden (vgl. DE-A-24 15 136), anstelle von reinen Aminoanthrachinonen, wie sie bislang ausschließlich als Ausgangsmaterial für Farbstoffsynthesen verwendet werden (vgl. US-A-23 02 729 und 28 74 168), rohes 1-Aminoanthrachinon (Mindestanteil : 65 %) zum Aufbau von Küpenfarbstoffen einzusetzen. Dennoch muß es als überraschend angesehen werden, daß die erfindungsgemäßen Amingemische mit praktisch gleichem Erfolg verwendet werden können, da es sich dabei um im höchsten Maße verunreinigte Produkte handelt, die maximal 60 %, vorzugsweise maximal 45 % an dem für die Umsetzung wichtigen 1-Aminoanthrachinon enthalten.

Beispiel 1

a) Eine Mischung aus
50,3 g 2-Amino-3,4-phthaloyl-7-brom-acridon (0,12 Mol)
17,1 g 1-Amino-4-benzoylamino-anthrachinon (0,05 Mol)
27,4 g reduziertes Mutterlaugenprodukt gemäß Beispiel 1 g (entspricht etwa 0,12 Mol)

wird in 600 ml Phenol bei 60 °C mit 18,5 g Cyanchlorid (0,1 Mol) versetzt. Innerhalb von 2 Stunden wird auf 140 °C unter Rühren gleichmäßig schnell erwärmt. Man rührt ca. 2 Stunden bei dieser Temperatur nach bis chromatographisch nur noch spurenweise 2-Amino-3,4-phthaloyl-7-bromacridon und 1-Amino-4-benzoylamino-anthrachinon nachweisbar sind. Man treibt das Phenol mit Wasserdampf ab, saugt die entstandene Suspension ab und wäscht sie mit heißem Wasser säurefrei. Erhalten werden 154 g Preßkuchen, enthaltend 99,6 g Farbstoff (98 % d. Th.) Chlorgehalt : 0,6 % ; Bromgehalt : 9,0 %.

7,74 g des Preßkuchens (enthaltend 5 g Farbstoff) werden mit 10 g eines üblichen Dispergiersmittels versetzt und mit Wasser auf 100 g aufgefüllt. Die erhaltene Dispersion wird 12 Stunden in einer Kugelmühle gemahlen.

Mit der erhaltenen ca. 5-%igen Farbstoffpaste wird Baumvolle wie folgt gefärbt :

b) 2 g Farbpaste werden in 190 ml Wasser unter Zusatz von 3 g Natriumsulfat, 2 g 50 %iger Natronlauge und 1 g Hydrosulfit während ca. 15 Min. bei 55 °C verküpt. In diese Küpe geht man mit 10 g

vorgenetztem Baumvollgarn ein und hält unter stetiger Bewegung 60-70 Min. Das entnommene Baumwollgarn wird mit $H_2O_2$ oxidiert, gespült, geseift, erneut gespült und getrocknet.

c) Man arbeitet wie unter b) beschrieben, erhöht die Natronlaugemenge um 50 %, verzichtet auf das Natriumsulfat und verküpt und färbt bei 65 °C.

Man erhält nach beiden Verfahren praktisch gleich kräftige olivgraue Färbungen mit guten Echtheitseigenschaften.

d) Man arbeitet wie in a) beschrieben, setzt aber folgendes Amingemisch ein :

50,3 g 2-Amino-3,4-phthaloyl-7-bromacridon (0,12 Mol)
34,2 g 1-Amino-4-benzoylamino-anthrachinon (0,12 Mol)
16,1 g reduziertes Mutterlaugenprodukt erhalten nach Versuch 1 g (ca. 0,7 Mol effektiv).

Erhalten werden 306 g Preßkuchen, enthaltend 107,1 g Farbstoff (99 % d. Th.) Cl-Gehalt : 0,4 % ; Bromgehalt : 8,8 %.

Mit einer analog 1a) hergestellten Farbstoffpaste wird Baumwolle nach 1b und 1c in stark rotstichig grauen Tönen gefärbt.

e) Man arbeitet wie in a) beschrieben, setzt aber folgendes Amingemisch ein :

58,7 g 2-Amino-3,4-phthaloyl-7-brom-acridon (0,14 Mol)
25,7 g 1-Amino-4-benzoylamino-anthrachinon (0,75 Mol)
16,7 g reduziertes Mutterlaugenprodukt erhalten nach Vers. 1 g) = 0,75 Mol eff.

Erhalten werden 383 g Preßkuchen, enthaltend 109,5 g Farbstoff (100 % d. Th.)

Analog a) in fein verteilte Form gebracht wird Baumwolle nach 1b und 1c in kräftigem blaustichig grauen Ton gefärbt.

f) Ersetzt man in 1e) das reduzierte Mutterlaugenprodukt durch eine gewichtsmäßig gleich große Menge an reinem 1-Amino-anthrachinon (Reingehalt 98 %), so erhält man 188 g Preßkuchen (111 g Farbstoffgehalt), der Baumwolle in einem deutlich gelbstichigeren Ton von vergleichbarer Stärke färbt.

g) Das oben eingesetzte reduzierte Mutterlaugenprodukt wurde wie folgt erhalten :
100 g Mutterlaugenprodukt folgender Zusammensetzung :

| | |
|---|---|
| 1-Nitro-anthrachinon : | 41,5 % |
| 2-Nitro-anthrachinon : | 25,9 % |
| 1,5-Dinitro-anthrachinon : | 3,4 % |
| 1,8-Dinitro-anthrachinon : | 6,4 % |
| 1,6-Dinitro-anthrachinon : | 4,6 % |
| 1,7-Dinitro-anthrachinon : | 4,0 % |
| Unsubst. Anthrachinon : | 11,2 % |
| Rest (unbekannt) | |

erhalten gemäß Verfahren der DE-A-23 43 977/78 werden in 1 l Wasser unter Zusatz von 1 g Dispergiermittel suspendiert. Bei 55-60 °C werden innerhalb 30 Min. 230 ml 30 %ige NaHS-Lösung zugetropft ; dabei steigt die Temperatur auf ca. 75 °C an. Es wird auf 95 °C hochgeheizt und bei dieser Temperatur 2 Std. gerührt. Im Dünnschichtchromatogramm sind nun keine Nitroverbindungen mehr nachweisbar. Bei 80 °C wird mit Bisulfitlösung der PH von 10-11 auf etwa 6,5 heruntergestellt. Es wird heiß abgesaugt, mit heißem Wasser neutral gewaschen und getrocknet.

Erhalten werden 88 g Amingemisch :

| | |
|---|---|
| 1-Amino-anthrachinon : | 40,1 % |
| 2-Amino-anthrachinon : | 22,5 % |
| 1,5-Diamino-anthrachinon : | 2,8 % |
| 1,8-Diamino-anthrachinon : | 5,8 % |
| 1,6-Diamino-anthrachinon : | 3,6 % |
| 1,7-Diamino-anthrachinon : | 3,9 % |
| Unsubst. Anthrachinon : | 12,4 % |
| (Rest auf 100 % unbekannt). | |

Arbeitet man wie in a), d) und e) beschrieben, ersetzt das 2-Amino-3,4-phthaloyl-7-brom-acridon aber durch stöchiometrisch gleich große Mengen 2-Amino-3,4-phthaloylacridon, so erhält man bei gleichartiger Aufarbeitung Farbstoffe, die Baumwolle in sehr ähnlichen Nuancen färben.

Beispiel 2

a) 56,7 g 2-(3,4-Phthaloyl-7-brom) acridonylamino(2)-4,6-dichlor-triazin (0,1 Mol) werden mit 44,6 g des Amingemisches aus Beispiel 1g) in 900 ml Phenol 1 Stunde bei 110 °C und 4 Std. bei 150 °C verrührt. Man läßt auf 80 °C abkühlen und verdünnt mit 900 ml Methanol. Nahe Siedetemperatur des Methanols wird abgesaugt und mit siedend heißem Methanol phenolfrei und mit heißem Wasser methanolfrei gewaschen und getrocknet.

Ausbeute : 324 g (Farbstoffanteil : 81 g), Chlorgehalt : 0,4 %, Bromgehalt : 9,3 %.

Dieses Produkt färbt — nach vorheriger Vermahlung analog 1a — Baumwolle nach allen üblichen Färbemethoden echt in olivgrünen Tönen.

Gegenüber dem bekannten Farbstoff C.I. Vat Green 35 besitzt der neue Farbstoff bei gleicher Farbstärke eine etwas blauere Nuance.

b) Das in 2a) eingesetzte 2-(3,4-Phthaloyl-7-brom)-acridonylamino(2)-4,6-dichlor-triazin kann folgendermaßen hergestellt werden :

100 g 2-Amino-3,4-phthaloyl-7-brom-acridon werden in 1 400 ml Nitrobenzol mit 88 g Cyanurchlorid während jeweils 1 Stunde bei 130 °C und 190-195 °C erwärmt, mit 1 400 ml Methanol verdünnt, bei 65 °C abgesaugt, mit reichlich heißem Methanol gewaschen und getrocknet.

Ausbeute : 127 g (95 % d. Th. bezogen auf Amin).

Cl-Gehalt : 12,1 % Br-Gehalt : 14,1 %

Beispiel 3

56,7 g 2-(3,4-Phthaloyl-7-brom)-acridonylamino(2)-4,6-dichlortriazin — erhalten nach Beispiel 2b) — werden mit 32,5 g 1-Amino-4-benzoylamino-anthrachinon und 21,2 g des nach Beispiel 1g erhaltenen Amingemisches in 600 g Phenol 3 Std. 140-142 °C verrührt. Man verdünnt mit 600 ml Pyridin, saugt bei 80 °C ab, wäscht nacheinander mit heißem Methanol, mit Wasser und trocknet. Erhalten werden 65,3 g. Dieser Farbstoff färbt — in fein verteilte Form gebracht — Baumwolle in grauen Tönen mit guten Naßechtheiten.

Beispiel 4

a) 66,9 g Amingemisch (ca. 0,3 Mol), erhalten nach Beispiel 1g, werden in 450 ml Phenol in der Wärme gelöst und anschließend mit 18,5 g (0,1 Mol) Cyanurchlorid versetzt. Man erwärmt innerhalb 1 Stunde auf 140 °C und rührt 3 Stunden bei gleicher Temperatur nach. Man verdünnt mit 800 ml Pyridin, saugt bei 100 °C ab, wäscht mit 300 ml heißem Methanol und mit heißem Wasser lösungsmittelfrei.

Erhalten werden 309 g Preßkuchen mit 61,8 g Farbstoffanteil.

Cl-Gehalt : 0,3 %

Der Preßkuchen wird in zwei Teile geteilt.

Teil 1 wird direkt in üblicher Weise formiert.

Teil 2 wird in 600 ml Wasser angeteigt, mit Soda auf pH 8,5-9 gestellt und bei 70-80 °C während 4 Std. mit Chlorlauge behandelt, dabei werden etwa 120 ml Chlorlauge verbraucht. Restliche Chlorlauge wird mit Bisulfit zerstört, abgesaugt und mit heißem Wasser gewaschen. Der Preßkuchen wird gleichartig formiert wie bei Teil 1.

Der Farbstoff aus Teil 1 färbt Baumwolle gemäß Vorschrift Beispiel 1b in einem gelbbraunen Ton. Teil 2 ergibt ebenfalls einen gelbbraunen Ton, der jedoch klarer und röter als der mit dem entsprechenden Produkt aus reinem 1-Aminoanthrachinon ist.

Beispiel 5

a) 49,3 g 1-Amino-5-benzoylamino-anthrachinon und 28,2 g des nach Beispiel 1g erhaltenen Aminoanthrachinongemisches werden mit 18,5 g Cyanurchlorid in 600 ml Phenol innerhalb 30 Min. auf 110 °C erwärmt und bei dieser Temperatur 1 Stunde gehalten. Anschließend wird innerhalb 1 Stunde auf 140 °C erwärmt und bei dieser Temperatur 3 Stunden gehalten. Danach wird das Phenol mit Wasserdampf abgetrieben, die verbleibende Suspension filtriert und mit heißem Wasser neutral gewaschen. Erhalten werden 312 g Preßkuchen mit einem Farbstoffgehalt von 83,5 g.

18,8 g des Preßkuchens werden mit 10 g eines üblichen Dispergiermittels angeteigt, mit Wasser auf 100 g aufgefüllt und 24 Std. in einer Kugelmühle vermahlen.

2 g des so erhaltenen Paste werden im Flottenverhältnis 1 : 20 unter Zusatz von 3 g Natriumsulfat und 2 g Natronlauge (50 %ig) mit 1 g Hydrosulfit bei 55 °C verküpt.

10 g Baumwollgarn werden in dieser Küpe 70 Min. lang bei 55 °C gefärbt. Nach Spülen, Oxidation, Seifen, Spülen und Trocknen des Garnes wird eine kräftige goldorange Färbung erhalten. Die Farbstärke ist die gleiche wie bei Einsatz einer gleich großen Farbstoffmenge des Farbstoffs, der bei Substitution des

oben eingesetzten Amino-anthrachinongemisches durch eine gleich große Gewichtsmenge 98 %igen 1-Amino-anthrachinons erhalten wird.

b) 100 g des nach a) erhaltenen Farbstoffpreßkuchens werden mit 200 ml Wasser angerührt, mit Soda auf pH 8,5 gestellt und bei 90-95 °C 2 Stunden mit Chlorlauge behandelt (Chlorlaugenverbrauch 120 ml). Nach Filtration und Wasserwäsche werden 81,6 g Preßkuchen mit 26,6 g Farbstoffgehalt erhalten. Dieser Farbstoff färbt unter den in 5a angegebenen Bedingungen Baumwolle etwas stärker und deutlich klarer als der in 5a eingesetzte Farbstoff.

Beispiel 6

Man arbeitet wie in Beispiel 5 beschrieben, setzt aber folgendes Amingemisch ein : 41 g 1-Amino-5-benzoylaminanthrachinon und 40 g des nach Beispiel 1g erhaltenen Amino-anthrachinongemisches. Erhalten werden 87,5 g Farbstoff, der nach Schönung mit Chlorlauge analog Beispiel 5b) und in fein verteilte Form gebracht, Baumwolle in ähnlichem Ton wie der nach Beispiel 5 erhaltene Farbstoff färbt.

Beispiel 7

a) 13,4 g des nach Beispiel 1g erhaltenen Amingemisches, 7 g Phenyldichlortriazin und 100 ml Phenol werden in 1 Std. von 60 auf 110 °C erwärmt, 1 Std. bei 110 °C gehalten und weitere 2 Stunden bei 140 °C.

Man destilliert das Phenol mit Wasserdampf ab, filtriert und wäscht mit heißem Wasser.

Der Preßkuchen wird mit Wasser auf 300 ml eingestellt, unter Rühren bei pH 8,5 mit Chlorlauge bei 90-95 °C behandelt während 2 Stunden. Man filtriert, wäscht mit heißem Wasser neutral und trocknet. Erhalten werden 16,9 g Farbstoff (Cl-Gehalt : 0,3 %).

In fein verteilte Form gebracht wird Baumwolle aus der Küpe bei 25 °C in einem gelben Ton echt gefärbt.

b) Man verfährt wie in a) beschrieben, ersetzt das Phenol durch eine gleich große Menge Nitrobenzol, erhöht die Endtemperatur aber auf 190 °C.

Erhalten wird ein Farbstoff, der Baumwolle sehr ähnlich wie in a) färbt und einen Chlorgehalt von 0,5 % besitzt.

**Ansprüche**

1. Verfahren zur Herstellung von Küpenfarbstoffen aus Abfallprodukten der Monosulfierung oder — vorzugsweise — der Mononitrierung von Anthrachinon durch Umwandlung in entsprechende Aminoanthrachinongemische und Umsetzung derselben — gegebenenfalls in Kombination mit anderen in der Chemie der Küpenfarbstoffe üblichen Aminoanthrachinonen — mit polyfunktionellen Säurechloriden zu den entsprechenden Anthrachinonamiden, dadurch gekennzeichnet, daß diese Amingemische aus

a) maximal 60 % 1-Aminoanthrachinon,
b) maximal 40 % 2-Aminoanthrachinon und
c) mindestens 30 % 1,5-, 1,6-, 1,7- und 1,8-Diaminoanthrachinon und sonstige Verunreinigungen,
wobei die Summe a) + b) maximal 70 % beträgt, (% = Gewichtsprozent)

bestehen.

2. Verfahren zur Herstellung von Küpenfarbstoffen aus nitroanthrachinonhaltigen Abfallprodukten der Mononitrierung von Anthrachinon durch Umwandlung in entsprechende Aminoanthrachinongemische und Umsetzung derselben — gegebenenfalls in Kombination mit anderen in der Chemie der Küpenfarbstoffe üblichen Aminoanthrachinonen — mit polyfunktionellen Säurechloriden zu entsprechenden Anthrachinonamiden, dadurch gekennzeichnet, daß diese Amingemische aus

a) maximal 45 % 1-Aminoanthrachinon,
b) maximal 25 % 2-Aminoanthrachinon und
c) mindestens 30 % 1,5-, 1,6-, 1,7- und 1,8-Diaminoanthrachinon und sonstige Verunreinigungen,
(% = Gewichtsprozent)

bestehen.

3. Verfahren nach Anspruch 1 oder 2, dadurch gekennzeichnet, daß man als polyfunktionelle Säurehalogenide Di- oder Trichlortriazine-1,3,5 einsetzt.

4. Verfahren nach Anspruch 1 bis 3, dadurch gekennzeichnet, daß man als polyfunktionelle Säurehalogenide solche der Formel

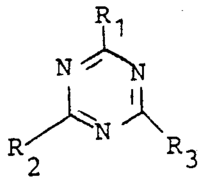

einsetzt, worin $R_1$-$R_3$ unabhängig voneinander Cl, Alkyl, Alkoxy, Alkylthio, Phenoxy, Phenylthio, Amino, Alkylamino, Dialkylamino, Phenylamino oder Phenyl bedeuten, mit der Maßgabe, daß mindestens zwei dieser Reste für Chlor stehen.

5. Verfahren nach Anspruch 1 bis 4, dadurch gekennzeichnet, daß man als Säurehalogenid Cyanurchlorid einsetzt.

6. Verfahren nach Anspruch 1 oder 2, dadurch gekennzeichnet, daß man die Amingemische aus Mutterlaugen gewinnt, wie sie bei der Reinigung von rohem 1-Nitroanthrachinon durch Umkristallisation aus Nitrobenzol oder durch Einengung der salpetersäurehaltigen Mutterlaugen bei der Mononitrierung von Anthrachinon mit hochkonzentrierter Salpetersäure und gegebenenfalls bei der anschließenden fraktionierten Destillation des Kristallisats anfallen.

7. Verfahren nach Anspruch 1 oder 2, dadurch gekennzeichnet, daß man die aus den Abfallprodukten erhaltenen Amingemische in Kombination mit 1-Amino-4-benzoyl-aminoanthrachinon und/oder gegebenenfalls halogenhaltigen 2-Amino-3,4-phthaloylacridon einsetzt.

8. Verfahren nach Anspruch 1-7, dadurch gekennzeichnet, daß man die Umsetzung mit den Säurechloriden in Gegenwart von Phenol durchführt.

9. Verfahren nach Anspruch 1-8, dadurch gekennzeichnet, daß das Verfahrensprodukt einer oxydativen Nachbehandlung unterworfen wird.

10. Verfahren zum Färben von Cellulosefasermaterialien, dadurch gekennzeichnet, daß man Küpenfarbstoffe, erhalten gemäß Verfahren der Ansprüche 1-9, verwendet.

**Claims**

1. Process for the preparation of vat dyestuffs from the waste products of the monosulphonation or, preferably, the mononitration of anthraquinone by conversion into corresponding aminoanthraquinone mixtures and reaction of the same, if appropriate in combination with other aminoanthraquinones customary in the chemistry of vat dyestuffs, with polyfunctional acid chlorides to give the corresponding anthraquinone amides, characterised in that these amine mixtures consist of

a) at most 60 % of 1-aminoanthraquinone,
b) at most 40 % of 2-aminoanthraquinone and
c) at least 30 % of 1,5-, 1,6-, 1,7- and 1,8-diaminoanthraquinone and other impurities, the sum of a) + b) being at most 70 % (% = per cent by weight).

2. Process for the preparation of vat dyestuffs from nitroanthraquinone-containing waste products of the mononitration of anthraquinone by conversion into corresponding aminoanthraquinone mixtures and reacting the same, if appropriate in combination with other aminoanthraquinones customary in the chemistry of vat dyestuffs, with polyfunctional acid chlorides to give corresponding anthraquinone amides, characterised in that these amine mixtures consist of

a) at most 45 % of 1-aminoanthraquinone,
b) at most 25 % of 2-aminoanthraquinone and
c) at least 30 % of 1,5-, 1,6-, 1,7- and 1,8-diaminoanthraquinone and other impurities (% = per cent by weight).

3. Process according to Claim 1 or 2, characterised in that dichloro- or trichloro-1,3,5-triazines are used as the polyfunctional acid halides.

4. Process according to Claim 1 to 3, characterised in that, as the polyfunctional acid halides, these of the formula

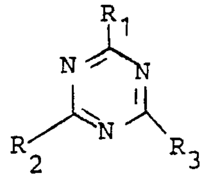

wherein $R_1$-$R_3$ independently of one another denote Cl, alkyl, alkoxy, alkylthio, phenoxy, phenylthio, amino, alkylamino, dialkylamino, phenylamino or phenyl, with the proviso that at least two of these radicals represent chlorine, are used.

5. Process according to Claim 1 to 4, characterised in that cyanuric acid chloride is used as the acid halide.

6. Process according to Claim 1 or 2, characterised in that the amine mixtures are obtained from mother liquors as are obtained on purifying crude 1-nitroanthraquinone by recrystallisation from nitrobenzene or by concentrating the nitric acid-containing mother liquors from the mononitration of anthraquinone using highly concentrated nitric acid and, if appropriate, subsequently fractionally distilling the crystalline product.

7. Process according to Claim 1 or 2, characterised in that the amine mixtures obtained from the waste products are used in combination with 1-amino-4-benzoylaminoanthraquinone and/or 2-amino-3,4-phthaloylacridone which may contain halogen.

8. Process according to Claim 1-7, characterised in that the reaction with the acid chlorides is carried out in the presence of phenol.

9. Process according to Claim 1-8, characterised in that the process product is subjected to an oxidative after-treatment.

10. Process for dyeing cellulose fibre materials, characterised in that vat dyestuffs obtained according to the processes of Claims 1-9 are used.

**Revendications**

1. Procédé de production de colorants pour cuve à partir de sous-produits de monosulfonation ou de préférence de mononitration d'anthraquinone par transformation en mélanges d'aminoanthraquinones correspondants et réaction de ces mélanges — éventuellement en association avec d'autres aminoanthraquinones classiques dans la chimie des colorants pour cuve — avec des chlorures d'acides polyfonctionnels pour former les anthraquinonamides correspondants, caractérisé en ce que ces mélanges d'amines sont formés

a) au maximum de 60 % de 1-aminoanthraquinone,
b) au maximum de 40 % de 2-aminoanthraquinone et
c) d'au moins 30 % de 1,5-, 1,6-, 1,7- et 1,8-diaminoanthraquinone et d'autres impuretés, la somme a) + b) s'élevant au maximum à 70 % (% = pourcent en poids)

2. Procédé de production de colorants pour cuve à partir de sous-produits, contenant de la nitroanthraquinone, de mononitration de l'anthraquinone par transformation en mélanges d'aminoanthraquinones correspondants et réaction de ces mélanges — le cas échéant en association avec d'autres aminoanthraquinones classiques dans la chimie des colorants pour cuve — avec des chlorures d'acides polyfonctionnels pour former des anthraquinonamides correspondants, caractérisé en ce que ces mélanges d'amines sont formés

a) au maximum de 45 % de 1-aminoanthraquinone,
b) au maximum de 25 % de 2-aminoanthraquinone et
c) d'au moins 30 % de 1,5-, 1,6-, 1,7- et 1,8-diaminoanthraquinone et d'autres impuretés (% = pourcent en poids).

3. Procédé suivant la revendication 1 ou 2, caractérisé en ce qu'on utilise comme halogénures d'acides polyfonctionnels des di- ou trichlorotriazines-1,3,5.

4. Procédé suivant les revendications 1 à 3, caractérisé en ce qu'on utilise comme halogénures d'acides polyfonctionnels des halogénures de formule

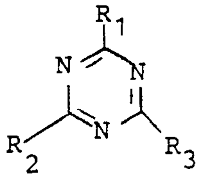

dans laquelle $R_1$ à $R_3$ représentent, indépendamment les uns des autres, Cl, un groupe alkyle, alkoxy, alkylthio, phénoxy, phénylthio, amino, alkylamino, dialkylamino, phénylamino ou phényle, sous réserve qu'au moins deux de ces restes représentent du chlore.

5. Procédé suivant les revendications 1 à 4, caractérisé en ce qu'on utilise le chlorure de cyanuryle

comme halogénure d'acide.

6. Procédé suivant la revendication 1 ou 2, caractérisé en ce qu'on obtient les mélanges d'amines à partir de liqueurs-mères qui sont obtenues lors de la purification de 1-nitroanthraquinone brute par recristallisation dans le nitrobenzène ou par concentration des liqueurs-mères contenant de l'acide nitrique obtenues dans la mononitration de l'anthraquinone avec l'acide nitrique très concentré et, le cas échéant, dans la distillation fractionnée subséquente du produit cristallisé.

7. Procédé suivant la revendication 1 ou 2, caractérisé en ce qu'on utilise les mélanges d'amines obtenus à partir des sous-produits en association avec la 1-amino-4-benzoylaminoanthraquinone et/ou la 2-amino-3,4-phtaloylacridone contenant éventuellement un halogène.

8. Procédé suivant les revendications 1 à 7, caractérisé en ce qu'on conduit la réaction avec les chlorures d'acides en présence de phénol.

9. Procédé suivant les revendications 1 à 8, caractérisé en ce que le produit obtenu est soumis à un traitement subséquent par oxydation.

10. Procédé de teinture de matières cellulosiques, caractérisé en ce qu'on utilise des colorants pour cuve obtenus par le procédé des revendications 1 à 9.